# EUROPÄISCHE PATENTANMELDUNG

(11) **EP 4 748 232 A1**
(43) Veröffentlichungstag der Anmeldung: **27.05.2026**
(21) Anmeldenummer: 24214857.5
(22) Anmeldetag: 22.11.2024
(51) Int. Cl.: A21C 9/00, A21C 11/00, A23P 30/00, B65G 15/00

(54) **VORRICHTUNG ZUM BEARBEITEN VON LEBENSMITTELN MIT MINDESTENS EINER LÖSBAR MIT DER VORRICHTUNG VERBUNDENEN HALTERUNG**

(71) Anmelder: Rondo Burgdorf AG, 3400 Burgdorf (CH)
(72) Erfinder: Schafroth, David, 1715 Alterswil (CH); Stürchler, Joel, 3400 Burgdorf (CH); Bevilaqua, Sascha, 4537 Wiedlisbach (CH)
(74) Vertreter: Keller Schneider Patent- und Markenanwälte AG

(57) **Zusammenfassung**

Die vorliegende Anmeldung betrifft eine Vorrichtung zur Bearbeitung von Lebensmitteln. Die Vorrichtung umfasst ein Förderelement, auf welchem die Lebensmittel in einer Förderrichtung gefördert werden können, sowie eine lösbar am Förderelement befestigte Halterung. An mindestens einer Längsseite des Förderelements ist mindestens ein Blechprofil befestigt, welches sich in einer Längsrichtung des Förderelements im Wesentlichen über die gesamte Länge des Förderelements erstreckt. Die Halterung weist wenigstens eine erste Befestigungseinheit auf, welche über mindestens ein erstes Verriegelungselement verfügt, welches zwischen einer ersten Position und einer zweiten Position um eine erste Schwenkachse, welche bei am Förderelement befestigter Halterung im Wesentlichen parallel zu einer Längsrichtung des mindestens einen Blechprofils verläuft, relativ zur ersten Befestigungseinheit schwenkbar ist. Das mindestens eine erste Verriegelungselement weist mindestens ein erstes Formschlusselement mit einer Form auf, welche im Wesentlichen komplementär zu einer Kontur mindestens einer Oberfläche des mindestens einen Blechprofils ist. Wenn die Halterung am Förderelement befestigt ist, steht das mindestens eine erste Formelement in der zweiten Position mit der Kontur der mindestens einen Oberfläche des mindestens einen Profilblechs formschlüssig in Eingriff. In der ersten Position ist das mindestens eine erste Formschlusselement zumindest teilweise vom mindestens einen Blechprofil beabstandet.

## Beschreibung

### Technisches Gebiet

Die Erfindung betrifft eine Vorrichtung zum Bearbeiten von Lebensmitteln mit einem Förderelement, mit welchem die Lebensmittel in einer Förderrichtung gefördert werden können, sowie mit mindestens einer Halterung, welche lösbar mit der Vorrichtung verbunden werden kann.

### Stand der Technik

Im Stand der Technik sind eine Vielzahl an Vorrichtungen zum Bearbeiten von Lebensmitteln mit einem Förderelement bekannt. Derartige Vorrichtungen umfassen üblicherweise mehrere Bearbeitungsstationen, welche entlang des Förderelements, welches üblicherweise als Förderband ausgestaltet ist, angeordnet. Mittels der Bearbeitungsstationen können unterschiedliche Bearbeitungsschritte vorgenommen werden, um aus einem Ausgangsmaterial ein Lebensmittel herzustellen. Im Bereich der Teigbearbeitung können mittels derartiger Vorrichtungen aus Teig, insbesondere einem Teigband, Teiglinge hergestellt werden, welche anschliessend gebacken werden können.

Um eine möglichst flexible Verwendung einer derartigen Vorrichtung zu ermöglichen, ist es von Vorteil, wenn die Bearbeitungsstationen modular ausgestaltet sind, so dass diese je nach Bedarf von der Vorrichtung entfernt bzw. auf dieser angeordnet werden können. Dadurch lassen sich mit derselben Vorrichtung flexibel unterschiedliche Lebensmittel bzw. Teiglinge herstellen. Nachteilig ist jedoch, dass die Bearbeitungsstationen relativ schwer und sperrig sind, weshalb für deren Entfernung oder Hinzufügung mehrere Personen eingesetzt werden müssen.

Die EP 3 501 286 B1 (Radie BV) beschreibt beispielsweise eine Teigbearbeitungsvorrichtung, welche ausgestaltet ist, um temporär von einem Förderband abgenommen zu werden, insbesondere für Reinigungs- oder Wartungszwecke oder wenn diese für die Herstellung bestimmter Teigprodukte nicht benötigt wird. Die Teigbearbeitungsvorrichtung ist als Brücke konfiguriert, welche sich über die gesamte Breite eines Förderbandes spannt. Die Teigbearbeitungsvorrichtung umfasst mindestens ein Bearbeitungswerkzeug, welches auf einem Gerüst angeordnet ist, wobei das Gerüst derart ausgestaltet ist, um in der Art einer Brücke über ein Förderband und sich an der Seite des Förderbandes abstützend angeordnet zu werden. Mindestens ein Ende des Gerüstes weist ein Transportmittel auf, mit welchem sich die Teigbearbeitungsvorrichtung quer über das Förderband bewegen lässt, wobei sich die Teigbearbeitungsvorrichtung während der Bewegung über das Transportmittel auf dem Förderband abstützt. Vorzugsweise verfügt das Gerüst über Befestigungsmittel, mit denen das Gerüst an einer bestimmten Position über dem Förderband fixiert werden kann, z.B. Formschlusselemente, welche mit den Seiten des Gerüstes des Förderbandes in Eingriff gebracht werden können.

Die CN 118239085 A (Anhui Technical College Mechanical & Electrical Engineering) offenbart eine Halterung für Sensoren, welche entlang einer Seite eines Förderbandes verschiebbar ist. Hierzu weist das Förderband auf einer Seite eine untere sowie eine obere Schiene auf, wobei die Halterung über einen Grundköper mit zwei Rollen mit diesen zwei Schienen zusammenwirkt. Eine Rolle läuft hierbei in einer Nut der unteren Schiene, während die obere Rolle innerhalb des Profils der oberen Schiene läuft. Die Halterung kann über einen Klemmmechanismus an beliebiger Stelle entlang der Schienen fixiert werden.

Die CN 218579135 U (Anhui Wanwei Zhixuan Engineering Technology Co. Ltd.) beschreibt eine Halterung für einen Sensor, welche an einer Seite eines Förderbandes verschiebbar angeordnet ist. Die Halterung verfügt über einen Schraubstock, mit welchem die Halterung auf der Seite des Förderbandes befestigt ist. Durch Lösen des Schraubstockes kann die Halterung frei entlang des Förderbandes verschoben werden.

Die EP 1 334 054 B1 (Mikael Järvenkyla) beschreibt eine Produktionslinie zur Herstellung von Lebensmitteln, welche eine Mehrzahl von Bearbeitungsmodulen umfasst, welche jeweils einen spezifischen Bearbeitungsschritt durchführen. Die Vorrichtung umfasst einen Rahmen mit Antriebsmitteln, welche mit den Bearbeitungsmodulen gekoppelt werden können. Die Bearbeitungsmodule verfügen über Rollen und werden seitlich an den Rahmen angedockt. Am Rahmen kann ein Förderband angebracht sein. Die Bearbeitungsmodule verfügen über eine Aussparung, so dass die Bearbeitungsmodule derart an den Rahmen gefahren werden können, dass das Förderband in diese Aussparung aufgenommen wird.

### Darstellung der Erfindung

Aufgabe der Erfindung ist es, eine dem eingangs genannten technischen Gebiet zugehörende Vorrichtung zur Bearbeitung von Lebensmitteln zu schaffen, welche über eine Halterung verfügt, welche einfach an jeder beliebigen Stelle entlang eines Förderelements der Vorrichtung zu befestigt und wieder von der Vorrichtung entfernt werden kann.

Die Lösung der Aufgabe ist durch die Merkmale des Anspruchs 1 definiert. Gemäss der Erfindung umfasst die Vorrichtung zur Bearbeitung von Lebensmitteln ein Förderelement, auf welchem die Lebensmittel in einer Förderrichtung gefördert werden können, sowie eine lösbar am Förderelement befestigte Halterung. An mindestens einer Längsseite des Förderelements ist mindestens ein Blechprofil befestigt, welches sich in einer Längsrichtung des Förderelements im Wesentlichen über die gesamte Länge des Förderelements erstreckt. Die Halterung weist wenigstens eine erste Befestigungseinheit auf, welche über mindestens ein erstes Verriegelungselement verfügt, welches zwischen einer ersten Position und einer zweiten Position um eine erste Schwenkachse, welche bei am Förderelement befestigter Halterung im Wesentlichen parallel zu einer Längsrichtung des mindestens einen Blechprofils verläuft, relativ zur ersten Befestigungseinheit schwenkbar ist. Das mindestens eine erste Verriegelungselement weist mindestens ein erstes Formschlusselement mit einer Form auf, welche im Wesentlichen komplementär zu einer Kontur mindestens einer Oberfläche des mindestens einen Blechprofils ist. Wenn die Halterung am Förderelement befestigt ist, steht das mindestens eine erste Formelement in der zweiten Position mit der Kontur der mindestens einen Oberfläche des mindestens einen Profilblechs formschlüssig in Eingriff. In der ersten Position ist das mindestens eine erste Formschlusselement zumindest teilweise vom mindestens einen Blechprofil beabstandet.

Dadurch, dass sich das mindestens eine Blechprofil über im Wesentlichen die gesamten Länge des Förderelements auf mindestens einer Längsseite desselben erstreckt, ist es möglich, die mindestens eine Halterung an einer beliebigen Stelle entlang des Förderelements zu befestigen. Durch eine Bewegung des mindestens einen ersten Verriegelungselements von der ersten Position in die zweite Position kann die mindestens eine Halterung einfach durch eine formschlüssige Verbindung zwischen dem ersten Formschlusselement und der Kontur der mindestens einen Oberfläche des mindestens einen Blechprofils am Förderelement befestigt und an einer Position entlang der Längsrichtung des Förderelements fixiert werden. Durch eine Bewegung des mindestens einen ersten Verriegelungselements von der zweiten Position in die erste Position kann die formschlüssige Verbindung einfach gelöst werden, um die Halterung beispielsweise von der Vorrichtung zu entfernen oder an einer anderen Position wieder zu befestigen und zu fixieren. Dadurch lässt sich die erfindungsgemässe Vorrichtung einfach und schnell neu konfigurieren, um beispielsweise eine andere Art von Lebensmitteln zu bearbeiten.

Die Vorrichtung wird vorzugsweise zur Bearbeitung eines Teigbandes oder von Teiglingen eingesetzt. Insbesondere kann mittels der Vorrichtung ein Teigband zu Teiglingen verarbeitet werden. Alternativ können mit der erfindungsgemässen Vorrichtung auch andere Lebensmittel bearbeitet werden, wie z.B. Süssigkeiten, Fleischwaren, Gemüse und andere.

Als "Teigling" wird in der vorliegenden Anmeldung ein zu einer dreidimensionalen Form verarbeitetes Teigstück verstanden. Als "Teig" wird in der vorliegenden Anmeldung eine Mischung aus wenigstens einem Mehl mit mindestens einer Flüssigkeit verstanden, z.B. ein Hefeteig, Mürbeteig, Biskuitteig, Blätterteig, Brandteig, Filoteig, Rührteig, Sauerteig oder Pastateig. Allerdings können mit der erfindungsgemässen Vorrichtung auch andere Lebensmittel verarbeitet werden.

Das Förderelement verfügt über mindestens einen Antrieb sowie einer Hauptfläche, auf welcher die Lebensmittel aufliegen und auf dieser in die Förderrichtung gefördert werden. Vorzugsweise ist das Förderelement als Förderband, d.h. als Endlosband, welche über mindestens zwei Umlenkrollen läuft, ausgestaltet. Alternativ kann das Förderelement jedoch auch als Rollenband, Gliedförderer oder ähnlich ausgestaltet sein.

Das Förderelement ist vorzugsweise auf einem Gestell angeordnet, mit welchem das Förderelement in einer definierten Höhe auf einen Boden gestellt werden kann. Das Förderelement ist vorzugsweise relativ zum Boden vertikal ausgerichtet.

Das Förderelement weist vorzugsweise eine längliche Form aus, verfügt demnach über eine wesentlich grössere Länge als Breite. Demgemäss verfügt das Förderelement über zwei Längsseiten, welche sich parallel zur Längenausdehnung des Förderelements erstrecken. Das Förderelement ist vorzugsweise gerade, kann jedoch in gewissen Ausführungsformen auch über mindestens einen Bogenabschnitt verfügen.

Die Halterung ist lösbar mit dem Förderelement verbunden, das heisst, dass die Halterung vom Förderelement gelöst werden kann, beispielsweise um diese zu warten, zu reinigen oder abseits der Vorrichtung zwischenzulagern, wenn diese zur Bearbeitung eines Lebensmittels gerade nicht verwendet wird. Die Halterung verfügt vorzugsweise über mindestens ein Bearbeitungsmittel, mit welchem die Lebensmittel bearbeitet werden können, einen Sensor zur Erfassung von Daten der Lebensmittel oder auch ein Kontrollpanel, mit dem die Funktion der Vorrichtung oder einer Komponente der Vorrichtung gesteuert werden kann.

Sofern die erfindungsgemässe Vorrichtung zur Bearbeitung von Teig oder Teiglingen verwendet wird, kann die Halterung über mindestens eine Walze, insbesondere Schneidwalze, mindestens einem Streuelement, insbesondere Mehlstreuelement, mindestens eine Bürste oder dergleichen verfügen.

Vorzugsweise verfügt die erfindungsgemässe Vorrichtung über mehr als eine Halterung, insbesondere zwei, drei, vier, fünf, sechs oder mehr Halterungen. Durch eine Kombination von mehreren Halterungen, welche vorzugsweise über unterschiedliche Bearbeitungsmittel, Sensoren und/oder Kontrollpaneelen verfügen, lässt sich die erfindungsgemässe Vorrichtung leicht und schnell zur Bearbeitung unterschiedlicher Lebensmittel, insbesondere zum Formen unterschiedlicher Teiglinge, neu konfigurieren.

Die Vorrichtung umfasst vorzugsweise mindestens eine Bearbeitungsstation, welche lösbar oder auch fix mit der Vorrichtung befestigt oder an dieser angeordnet ist. Durch eine entsprechende Kombination der mindestens einen Bearbeitungsstation sowie der Halterung oder mehrerer Halterungen kann somit eine grosse Anzahl an unterschiedlichen Lebensmitteln mit der erfindungsgemässen Vorrichtung bearbeitet werden bzw. Teig zu unterschiedlichen Teiglingen geformt werden. Beispielsweise lässt sich bei der Teigbearbeitung mit einer fix an der Vorrichtung befestigten Ausrollwalze Teig oder ein Teigband auf eine bestimmte Dicke auswalzen, wobei anschliessend das Teigband durch eine geeignete und flexible Anordnung von Halterungen mit unterschiedlichen Bearbeitungsmitteln in Förderrichtung stromabwärts der Ausrollwalze je nach der Anordnung der Halterungen zu unterschiedlich geformten Teiglingen bearbeitet werden kann.

Das mindestens eine Blechprofil ist mindestens an einer Längskante des Förderelements befestigt, vorzugsweise ist jedoch an beiden Längskanten des Förderelements jeweils ein Blechprofil befestigt. Das mindestens eine Blechprofil kann einstückig ausgebildet sein, besteht jedoch vorzugsweise aus mindestens zwei Segmenten, welche in Längsrichtung hintereinander an der mindestens einen Längskante am Förderelement befestigt sind. Das mindestens eine Blechprofil weist vorzugsweise mindestens eine Oberfläche auf, welche eine Kontur, d.h. eine definierte dreidimensionale Form, aufweist. Vorzugsweise umfasst diese Kontur mindestens eine Biegung und/oder mindestens einen Knick.

Das mindestens eine Blechprofil erstreckt sich im Wesentlichen über die gesamte Länge, d.h. über die gesamte Längsausdehnung des Förderelements entlang der mindestens einen Seitenkante des Förderelements. Als im Wesentlichen über die gesamte Länge wird in der vorliegenden Anmeldung verstanden, dass sich das mindestens eine Blechprofil über mindestens 70%, vorzugsweise über mindestens 80%, insbesondere bevorzugt über mindestens 90% der Längenausdehnung des Förderelements entlang der mindestens einen Seitenkante erstreckt.

Vorzugsweise umfasst die Halterung nebst der mindestens einen ersten Befestigungseinheit noch weitere Komponenten, welche insbesondere mindestens ein Bearbeitungsmittel, einen Sensor oder ein Kontrollpanel umfassen. In einer besonderen Ausführungsform weist die mindestens eine Halterung jedoch nur die wenigstens eine Befestigungseinheit auf, welche in diesem Fall über Befestigungsmittel, z.B. mindestens eine Bohrung, verfügt, mit denen mindestens eine weitere Komponente mit der mindestens einen ersten Befestigungseinheit verbunden werden kann. In diesem Fall kann die mindestens eine Halterung zur lösbaren Befestigung einer an sich beliebigen Komponente am Förderelement verwendet werden, da die Komponente einfach mittels der Befestigungsmittel an der ersten Befestigungseinheit der Halterung befestigt werden kann.

Das mindestens eine erste Verriegelungselement ist um die erste Schwenkachse relativ zur mindestens einen ersten Befestigungseinheit schwenkbar gelagert. Die erste Position und die zweite Position entsprechen vorzugsweise den Endpunkten der Schwenkbewegung. Die Schwenkbewegung von der ersten Position zur zweiten Position erfolgt vorzugsweise um einen Winkel zwischen 5° und 45°. Die Schwenkbewegung des mindestens einen ersten Verriegelungselements erfolgt vorzugsweise von Hand. Alternativ kann die Schwenkbewegung jedoch auch motorisch erfolgen. Zum Schwenken von Hand verfügt das erste Verriegelungselement vorzugsweise über eine Grifffläche oder über einen Handgriff. In diesem Fall befindet sich die erste Schwenkachse zwischen dem mindestens einen Formschlusselement und der Grifffläche oder dem Handgriff, so dass eine Betätigung der Grifffläche oder des Handgriffs von einer der Hauptfläche des Förderelements abgewandten Seite der ersten Befestigungseinheit her erfolgen kann. Alternativ kann die Schwenkbewegung jedoch auch über einen Hebel erfolgen, der an der wenigstens einen ersten Befestigungseinheit angebracht ist und über eine Mechanik mit dem mindestens einen ersten Verriegelungselement wirkverbunden ist.

In einer Ausführungsform kann das mindestens eine erste Verriegelungselement mittels eines Federmittels zur zweiten Position hin vorgespannt sein. Alternativ bevorzugt kann das mindestens eine erste Verriegelungselement auch in der zweiten Position mechanisch arretiert werden. Bei diesen zwei Ausführungsformen wird sichergestellt, dass die mindestens eine Halterung stets sicher in einer definierten Position entlang des Förderelements befestigt und fixiert werden kann.

Das mindestens eine erste Verriegelungselement kann auch über mehr als ein erstes Formschlusselement verfügen, insbesondere zwei, drei, vier oder mehr erste Formschlusselemente. In diesem Fall ist das mindestens eine erste Verriegelungselement vorzugsweise als Schwenkplatte ausgebildet, auf welcher alle ersten Formschlusselemente gemeinsam auf einer ersten Fläche der Schwenkplatte befestigt sind, wobei die Schwenkplatte um die erste Schwenkachse relativ zur ersten Befestigungseinheit schwenkbar ist. Durch diese Massnahme wird erzielt, dass alle ersten Formschlusselemente des mindestens einen ersten Verriegelungselements zusammen von der ersten Position in die zweite Position oder umgekehrt geschwenkt werden.

Ferner kann die wenigstens eine erste Befestigungseinheit auch über mehrere erste Verriegelungselemente verfügen, welche insbesondere unabhängig voneinander zwischen der ersten Position und der zweiten Position sowie umgekehrt geschwenkt werden können. Eine derartige Anordnung erhöht die Sicherheit, da selbst bei einem ungeplanten oder unbeabsichtigten Schwenken einer der ersten Verriegelungselemente von der zweiten Position in die erste Position eine sichere Befestigung und Fixierung der Halterung am Förderelement durch mindestens ein weiteres Verriegelungselement sichergestellt werden kann.

Die erste Befestigungseinheit umfasst vorzugsweise einen Abschnitt aus einen U- oder H-Profil, wobei die Grundfläche des U- oder H-Profils bei auf dem mindestens einen Blechprofil aufgesetzter erster Befestigungseinheit parallel zur Längsseite des Förderelements steht. Bei dieser Ausführungsform ist die erste Schwenkachse schwenkbar an den einander gegenüberliegenden Flanschflächen des U- oder H-Profils drehbar gelagert. Das mindestens eine erste Verriegelungselement ist vorzugsweise zwischen den beiden Flanschflächen des U- oder H-Profils angeordnet. Durch die Anwesenheit eines Abschnitts aus einem U- oder H-Profil kann die Steifheit der ersten Befestigungseinheit erheblich gesteigert werden, womit sichergestellt werden kann, dass die mindestens eine Halterung im Wesentlichen drehfest an der Vorrichtung befestigt werden kann.

Das mindestens eine erste Formschlusselement weist eine Form auf, die komplementär zur Kontur der mindestens einen Oberfläche des mindestens einen Blechprofils ist. Vorzugsweise ist das mindestens eine erste Formschlusselement dabei derart geformt, dass dieses gegenüber der Kontur ein leichtes Übermass aufweist, so dass ein sicheres Eingreifen des mindestens einen Formschlusselements in die Kontur gewährleistet ist. Das mindestens eine Formschlusselement ist hierbei vorzugsweise aus einem elastisch verformbaren Material gefertigt.

Um ein leichtes Lösen des mindestens einen Formschlusselements von der Kontur der Oberfläche des mindestens einen Blechprofils zu ermöglichen, weist die Kontur vorzugsweise keinen Hinterschnitt auf, in welchen das mindestens eine erste Formschlusselement eingreift.

In der ersten Position ist das mindestens eine erste Formschlusselement vom mindestens einen Blechprofil zumindest teilweise beabstandet, so dass das mindestens eine Formschlusselement nicht in formschlüssigem Eingriff mit der Kontur der mindestens einen Oberfläche des mindestens einen Blechprofils steht. Das heisst, dass zumindest ein Teil des mindestens einen ersten Formschlusselements in der ersten Position noch in Berührung mit dem mindestens einen Blechprofil sein kann, z.B. auf diesem noch teilweise aufliegen kann.

In der zweiten Position steht das erste Formschlusselement in formschlüssigem Eingriff mit dem mindestens einen Blechprofil, das heisst, dass das erste Formschlusselement formschlüssig mit der Kontur der mindestens einen Oberfläche des mindestens einen Blechprofils in Eingriff steht. Durch diesen formschlüssigen Eingriff kann die mindestens eine Halterung am Förderelement befestigt und auf dem mindestens einen Blechprofil an einer bestimmten Position fixiert werden.

Das mindestens eine Blechprofil besteht vorzugsweise aus Stahl, insbesondere rostfreiem Stahl, Aluminium oder einer Aluminiumlegierung.

Vorzugsweise ist das mindestens eine erste Verriegelungselement mit einem Hebel, der um eine zweite Schwenkachse, die parallel zur ersten Schwenkachse verläuft, relativ zur ersten Befestigungseinheit schwenkbar ist, über ein Kniehebelgelenk verbunden, so dass mittels Schwenken des Hebels das mindestens eine erste Verriegelungselement von der ersten Position in die zweite Position und umgekehrt geschwenkt werden kann.

Kniehebelgelenke sind dem Fachmann auf dem Gebiet bekannt. Die Verwendung eines Kniehebelgelenks hat den Vorteil, dass am Ende der Schwenkbewegung des mindestens einen ersten Verriegelungselements von der ersten in die zweite Position eine hohe Kraftübersetzung zwischen Hebel und dem mindestens einen ersten Verriegelungselement vorliegt, welche die Herstellung des Formschlusses zwischen dem mindestens einen ersten Formschlusselement und der Kontur vereinfacht. Umgekehrt liegt bei einer Bewegung von der zweiten Position zur ersten Position am Anfang der Schwenkbewegung eine hohe Kraftübertagung zwischen Hebel und dem mindestens einen ersten Verriegelungselement vor, was das Lösen der formschlüssigen Verbindung vereinfacht. Ferner kann bei einer Überstreckung des Kniehebelgelenks über einen Totpunkt hinaus eine Verriegelung des Kniehebelgelenks erreicht werden, womit eine effektive Sicherung des Hebels vor einem unbeabsichtigten Lösen erzielt werden kann, insbesondere in der Position des Hebels, der der zweiten Position des mindestens einen ersten Verriegelungselements entspricht.

Vorzugsweise verfügt die Halterung über eine erste Montageplatte, welche mit der ersten Befestigungseinheit verbunden ist und derart ausgestaltet ist, dass bei am Förderelement befestigter Halterung die erste Montageplatte von einer Hauptfläche des Förderelements, auf welchem die Lebensmittel aufliegen können, rechtwinklig absteht.

Die Montageplatte ermöglicht die Befestigung weiterer Elemente, wie beispielsweise Sensoren, Bearbeitungsmitteln zur Bearbeitung von auf dem Förderelement aufliegender Lebensmittel, Kontrollpaneele oder Querstreben an der Halterung. Zur Befestigung weiterer Elemente an der Montageplatte verfügt diese vorzugsweise über entsprechende Befestigungsmittel, wie z.B. Bohrungen, Aufnahmen, Nuten oder ähnlich.

Vorzugsweise ist an beiden Längsseiten des Förderelements jeweils mindestens ein Blechprofil befestigt. Die Blechprofile erstrecken sich jeweils in einer Längsrichtung des Förderelements im Wesentlichen über die gesamte Länge des Förderelements entlang der jeweiligen Längsseite und verfügen jeweils über mindestens eine Oberfläche, welche dieselbe Kontur aufweisen. Die Halterung verfügt über eine zweite Befestigungseinheit, welche eine zweite Montageplatte aufweist, die derart ausgestaltet ist, dass bei am Förderelement befestigter Halterung die zweite Montageplatte von der Hauptfläche des Förderelements rechtwinklig in derselben Richtung absteht, wie die erste Montageplatte. Die erste und die zweite Montageplatte sind über mindestens eine Querstrebe in einem definierten Abstand relativ zueinander miteinander befestigt. Der definierte Abstand ist derart gewählt, dass bei am Förderelement befestigter Halterung das mindestens eine erste Formschlusselement in der zweiten Position mit der Kontur der mindestens einen Oberfläche eines ersten Blechprofils auf einer ersten Längsseite des Förderelements in formschlüssigen Eingriff steht und mindestens ein Befestigungselement der zweiten Befestigungseinheit in Wirkverbindung mit einem zweiten Blechprofil auf einer zweiten Längsseite des Förderelements, welche der ersten Längsseite gegenüberliegt, steht.

Bei dieser Ausführungsform bildet die Halterung demnach eine Brücke, welche an den Blechprofilen beidseitig des Förderelements befestigt werden kann, wobei die mindestens eine Querstrebe sich quer relativ zur Förderrichtung des Förderelements über dieses erstreckt. An der mindestens einen Querstrebe können weitere Elemente, insbesondere Sensoren sowie Bearbeitungsmittel zur Bearbeitung von auf dem Förderelement aufliegenden Lebensmitteln, befestigt werden.

Die Blechprofile an beiden Längsseiten des Förderelements verfügen beide über dieselbe Kontur. Dadurch kann die Halterung auf derart am Förderelement befestigt werden, dass das mindestens eine erste Formschlusselement mit der Kontur der mindestens einen Oberfläche des zweiten Blechprofils auf der zweiten Längsseite in Eingriff steht und das mindestens eine Befestigungselement mit der Kontur der mindestens einen Oberfläche des ersten Blechprofils auf der ersten Längsseite des Förderelements in Wirkverbindung steht.

In diesem Zusammenhang ist die Wirkverbindung des mindestens einen Befestigungselements mit der Kontur der mindestens einen Oberfläche des Blechprofils so zu verstehen, dass das mindestens eine Befestigungselement mit der Kontur in Eingriff steht oder auf dieser abgestützt ist, insbesondere in vertikaler Richtung.

Vorzugsweise ist das mindestens eine Befestigungselement ein zweites Formschlusselement, welches eine Form aufweist, welche im Wesentlichen komplementär zu einer Kontur der mindestens einer Oberfläche des zweiten Blechprofils ist und bei am Förderelement befestigter Halterung in formschlüssigem Eingriff mit dem zweiten Blechprofil steht.

Das mindestens eine zweite Formschlusselement verfügt vorzugsweise über dieselbe Form, wie das mindestens eine erste Formschlusselement. Alternativ kann das mindestens eine zweite Formschlusselement jedoch auch über eine andere Form als das mindestens eine erste Formschlusselement aufweisen. Da jedoch die Blechprofile an beiden Längsseiten des Förderelements über mindestens eine Oberfläche mit derselben Kontur verfügen, wird vorzugsweise zumindest ein Teil der Form des mindestens einen ersten Formschlusselements sowie des mindestens einen zweiten Formschlusselements miteinander übereinstimmen.

Das mindestens eine zweite Formschlusselement ist vorzugsweise fix an der zweiten Befestigungseinheit angebracht, das heisst dieses ist nicht wie das mindestens eine erste Formschlusselement zwischen zwei Positionen schwenkbar. Diese Ausführungsform ermöglicht die Befestigung sowie das Lösen der mindestens einen Halterung durch einen einzigen Operateur, da nur auf einer Längsseite des Förderelements mindestens ein Formschlusselement von der ersten Position in die zweite Position bzw. umgekehrt geschwenkt werden muss. Der Operateur kann demnach von derselben Seite des Förderelements aus sowohl die Halterung in der Form einer Brücke auf die beiden Blechprofile anordnen bzw. von diesen lösen als auch das mindestens eine erste Verriegelungselement manuell schwenken.

Bei gewissen Ausführungsformen kann auch das mindestens eine zweite Formschlusselement auf mindestens einem zweiten Verriegelungselement angeordnet sein, welches wiederum analog zum ersten Verriegelungselement schwenkbar an der zweiten Befestigungseinheit gelagert ist.

In einer anderen bevorzugten Ausführungsform ist das mindestens eine Befestigungselement eine Rolle, welche derart angeordnet und ausgerichtet ist, dass bei am Förderelement befestigter Halterung die mindestens eine Rolle auf dem mindestens einen Blechprofil anliegt, wobei die Drehachse der Rolle rechtwinklig zu einer Längsachse des zweiten Blechprofils steht.

Die mindestens eine Rolle kann hierbei auf der mindestens einen Oberfläche mit der Kontur anliegen, oder auf einer anderen Oberfläche des Blechprofils. Beispielsweise kann die mindestens eine Rolle auf einer Oberfläche des Blechprofils aufliegen, welche parallel zur Hauptfläche des Förderelements ist. Vorzugsweise liegt die mindestens eine Rolle jedoch auf der mindestens einen Oberfläche des zweiten Blechprofils mit der Kontur auf.

Die Mantelfläche der mindestens einen Rolle verfügt vorzugsweise über eine Form, welche komplementär zu zumindest einem Teil der Kontur der mindestens einen Oberfläche des zweiten Blechprofils ist. Dadurch kann die mindestens eine Rolle in Eingriff mit dem zumindest einen Teil der Kontur in Eingriff gebracht werden. Vorzugsweise verfügt die Mantelfläche der mindestens eine Rolle über mindestens eine Rille, in welche ein Knick der Kontur eingreifen kann.

Die Ausrichtung der Drehachse der mindestens einen Rolle ermöglicht es dieser, auf dem zweiten Blechprofil in dessen Längsrichtung zu rollen, wenn das mindestens eine erste Formschlusselement in der ersten Position ist. Dies ermöglicht ein einfaches Verschieben der Halterung in Längsrichtung des Förderelements, beispielsweise um die Vorrichtung neu zu konfigurieren, wenn z.B. ein anderes Lebensmittel mit der Vorrichtung bearbeitet werden soll.

Vorzugsweise ist das mindestens eine erste Formschlusselement, das mindestens eine zweite Formschlusselement und/oder die mindestens eine Rolle aus einem Polymermaterial gefertigt. Dadurch kann das mindestens eine erste Formschlusselement, das mindestens eine zweite Formschlusselement und/oder die mindestens eine Rolle einfach hergestellt werden, z.B. mittels Spritzguss.

Das Polymermaterial ist vorzugsweise ein Elastomer oder weist eine elastische Eigenschaft auf. Sofern das Polymermaterial ein Elastomer ist oder elastische Eigenschaften aufweist, kann das mindestens eine erste Formschlusselement bzw. allenfalls das mindestens eine zweite Formschlusselement gegenüber der Kontur der mindestens einen Oberfläche des mindestens einen Blechprofils aufweisen. Beim Herstellen der formschlüssigen Verbindung wird das mindestens eine erste Formschlusselement bzw. allenfalls das mindestens eine zweite Formschlusselement leicht komprimiert, was zusätzlich zur formschlüssigen Verbindung auch eine kraftschlüssige Verbindung ermöglicht.

Vorzugsweise steht die mindestens eine Oberfläche des mindestens einen Blechprofils mit der Kontur in einem rechten Winkel zu einer Hauptfläche des Förderelements, auf welchem die Lebensmittel gefördert werden. Vorzugsweise ist die mindestens eine Oberfläche mit der Kontur vom Förderelement weg gerichtet. Sofern an beiden Längsseiten des Förderelements mindestens ein Blechprofil befestigt ist, so sind vorzugsweise die Oberflächen mit der Kontur der Blechprofile an beiden Längsseiten des Förderelements vom Förderelement weg gerichtet, zeigen demnach nach aussen.

Vorzugsweise ist die Kontur der mindestens einen Oberfläche in einer Richtung rechtwinklig zu einer Längsachse des mindestens einen Blechprofils symmetrisch ausgebildet. Dies ermöglicht eine Befestigung der mindestens einen Halterung in zwei unterschiedlichen Ausrichtungen an der Vorrichtung, selbst wenn das mindestens eine erste Formschlusselement selbst keine Form mit einem symmetrischen Querschnitt aufweist. Sofern die mindestens eine Halterung demnach über eine erste Montageplatte verfügt, so lässt sich die mindestens eine erste Halterung derart an der Vorrichtung befestigen, dass die erste Montageplatte relativ zur Hauptfläche des Förderelements vertikal nach oben oder vertikal nach unten gerichtet ist.

Vorzugsweise weist die Kontur der mindestens einen Oberfläche im Querschnitt im Wesentlichen die Form des Buchstabens W auf. Ein Blechprofil mit einer derartig geformten Kontur lässt sich einfach durch drei Biegeschritte aus einem flachen Blech oder durch Strangpressen herstellen.

Vorzugsweise verfügt die erste Befestigungseinheit über mindestens eine Rolle, welche derart angeordnet und ausgerichtet ist, dass bei auf dem mindestens einen Blechprofil angeordneter erster Befestigungseinheit die mindestens eine Rolle auf dem mindestens einen Blechprofil in Längsrichtung des mindestens einen Blechprofils abrollt, so dass die mindestens eine Halterung linear entlang des Förderelements bewegbar ist, wenn das mindestens eine erste Verriegelungselement in der ersten Position ist.

Durch das Vorsehen mindestens einer Rolle kann die Halterung sehr einfach entlang des Förderelements verschoben werden, um diese beispielswese an einer anderen Position zu fixieren. Sofern die Halterung als Brücke mit einer zweiten Befestigungseinheit ausgestaltet ist, so verfügt diese vorzugsweise ebenfalls über mindestens eine Rolle.

Vorzugsweise verfügt die die Vorrichtung über eine Mehrzahl von Anschlussboxen, welche entlang der Längsrichtung des Förderelements insbesondere in regelmässigen Abständen angeordnet sind, wobei die Anschlussboxen über mindestens einen elektrischen Anschluss und/oder über mindestens einen Datenanschluss verfügen.

Mittels des mindestens einen elektrischen Anschlusses und/oder des mindestens einen Datenanschlusses kann mindestens ein zusätzliches Element, welches an der mindestens einen Halterung angeordnet ist, mit Strom und/oder Daten versorgt werden. Hierzu verfügt das mindestens eine zusätzliche Element oder die mindestens eine Halterung über mindestens ein Kabel mit einem Stecker oder einer Kupplung, welche mit dem mindestens einen Strom- oder Datenanschluss verbunden werden kann. Über den mindestens einen Datenanschluss lassen sich Daten von der Vorrichtung, insbesondere einer Steuerungseinheit, zum mindestens einen zusätzlichen Element und umgekehrt übertragen. Vorzugsweise sind die Datenanschlüsse aller Anschlussboxen über einen Datenbus der Vorrichtung miteinander und mit einer Steuerungseinheit der Vorrichtung verbunden.

Durch das Vorsehen mehrerer Anschlussboxen kann die mindestens eine Halterung unabhängig davon, an welcher Position sich diese entlang der Längenausdehnung des Förderelements an der Vorrichtung befestigt ist, stets einfach mit Strom und/oder Daten versorgen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine erste Ausführungsform einer erfindungsgemässen Vorrichtung in einer perspektivischen Ansicht;
- Fig. 2: die erste Ausführungsform der erfindungsgemässen Vorrichtung gemäss Fig. 1 von vorne in einer perspektivischen Ansicht;
- Fig. 3: eine perspektivische Ansicht einer Ausführungsform einer Halterung für eine erfindungsgemässe Vorrichtung;
- Fig. 4: zeigt die Ausführungsform der Halterung gemäss Fig. 3 in einer perspektivischen Ansicht aus einem anderen Blickwinkel;
- Fig. 5: einen Querschnitt durch die erste Befestigungseinheit der Halterung gemäss Figs. 3 und 4;
- Fig. 6: eine schematische Darstellung einer formschlüssigen Verbindung zwischen einem ersten Formschlusselement mit der Kontur einer Oberfläche eines Blechprofils;
- Fig. 7: eine schematische Darstellung einer formschlüssigen Verbindung zwischen einem ersten Formschlusselement mit der Kontur einer Oberfläche eines Blechprofils in einer zweiten Ausrichtung;
- Fig. 8: eine weitere Ausführungsform einer Halterung für eine erfindungsgemässe Vorrichtung;
- Fig. 9: eine weitere Ausführungsform einer Halterung für eine erfindungsgemässe Vorrichtung mit Rollen;
- Fig. 10: die Halterung gemäss der Fig. 9 aus einem anderen Blickwinkel

Grundsätzlich sind in den Figuren gleiche Teile mit gleichen Bezugszeichen versehen.

### Wege zur Ausführung der Erfindung

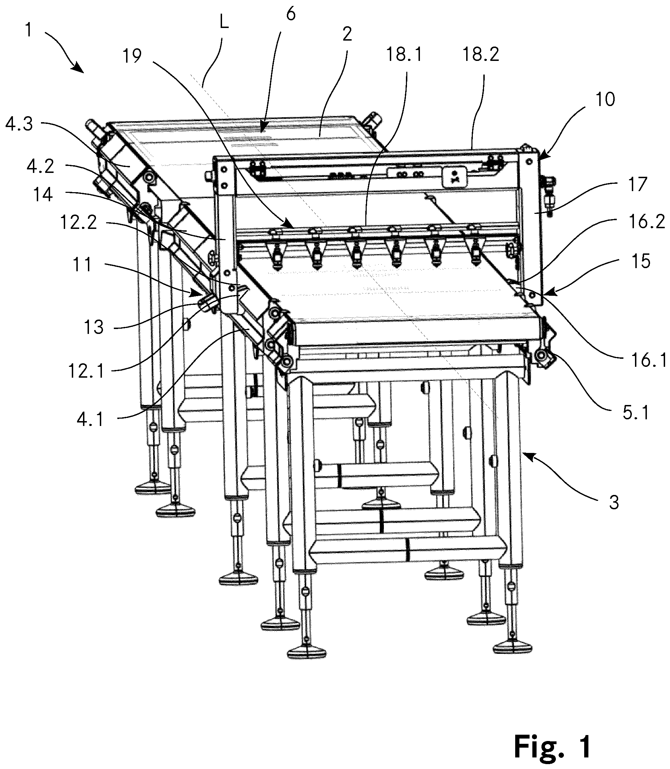

Die Fig. 1 zeigt eine erste Ausführungsform einer erfindungsgemässen Vorrichtung 1 in einer perspektivischen Ansicht. Die Vorrichtung umfasst ein Förderelement 2, welches bei der gezeigten Ausführungsform als Förderband ausgebildet ist. Das Förderelement 2 erstreckt sich in einer Längsrichtung entlang einer Längsachse L und weist eine Hauptfläche 6 auf, auf welcher Lebensmittel, insbesondere ein Teigband oder Teiglinge, aufliegen können, um mittels des Förderelements 2 in einer Förderrichtung gefördert werden zu können. Das Förderelement 2 verfügt über einen Antrieb (nicht gezeigt), mit welchem dieses derart angetrieben werden kann, dass die Hauptfläche 6 in die Förderrichtung bewegt wird. Das Förderelement 2 ist auf einem Gestell 3 angeordnet, welches über eine entsprechende Anzahl an Stützen verfügt, mit welchen das Förderelement 2 auf einen Boden gestellt werden kann. Das Gestell 3 ist insbesondere derart ausgeführt, dass die Hauptfläche 6 des Förderelements 2 vertikal ausgerichtet auf einem Boden angeordnet werden kann.

An beiden Längsseiten des Förderelements 2, das heisst an denjenigen Seiten, welche sich entlang der Längsrichtung L des Förderelements 2 erstrecken, sind Profilbleche 4.1-4.3, 5.1 angeordnet. Diese Profilbleche 4.1-4.3, 5.1 erstrecken sich im Wesentlichen entlang der gesamten Längenausdehnung des Förderelements 2. Wie auf der Fig. 1 erkennbar ist, sind auf einer Längsseite des Förderelements 2 mehrere Profilbleche 4.1-4.3, 5.1 hintereinander angeordnet, damit sich die Profilbleche 4.1,4.3, 5.1 sich im Wesentlichen entlang der gesamten Längenausdehnung des Förderelements 2 erstrecken. Die Profilbleche 4.1-4.3, 5.1 weisen eine Oberfläche auf, welche über eine Kontur verfügt. Bei der gezeigten Ausführungsform weist die Kontur im Wesentlichen die Form des Buchstabens W auf, welcher um 90° aus der Horizontalen gedreht ist. Bei der gezeigten Ausführungsform ist die Oberfläche mit der Kontur der Profilbleche 4.1-4.3, 5.1 derart ausgerichtet, dass diese rechtwinklig zur Hauptfläche 6 des Förderelements 2 steht und von dieser weg gerichtet ist.

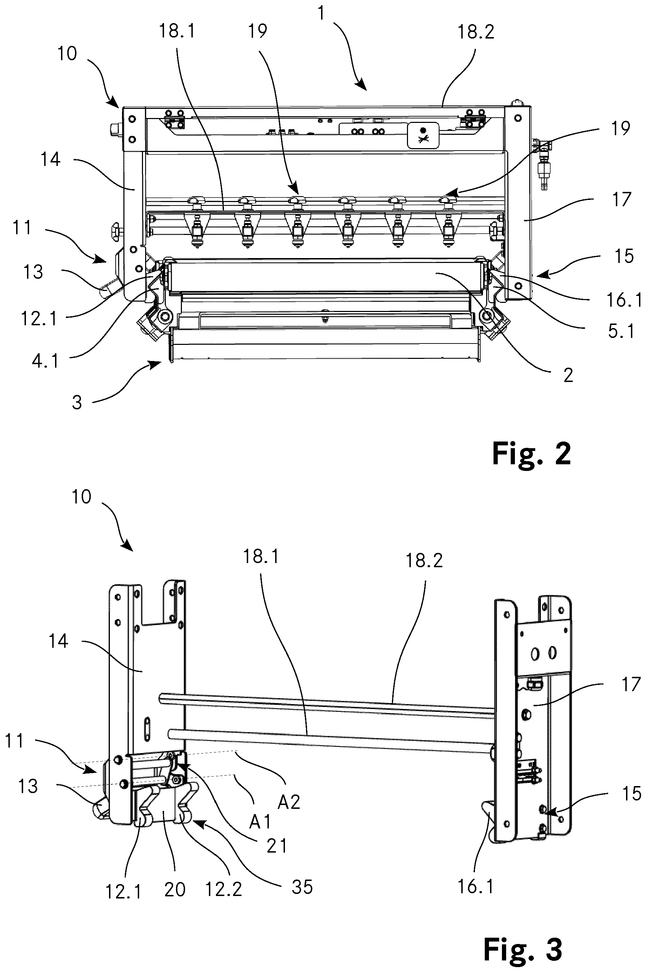

Die Vorrichtung 1 verfügt ferner über eine Halterung 10 mit einer erste Befestigungseinheit 11. Die Halterung 10 verfügt über eine erste Montageplatte 14, welche bei der gezeigten Ausführungsform einstückig mit der ersten Befestigungseinheit 11 ausgebildet ist. Alternativ könnte die erste Montageplatte 14 jedoch auch als separates Bauteil vorliegen, welches mit der ersten Befestigungseinheit 11 befestigt ist. Die erste Montageplatte 14 sowie die erste Befestigungseinheit 11 sind in der gezeigten Ausführungsform als H-Profil ausgestaltet, wodurch diese Elemente über eine besonders hohe Steifheit verfügen. Die erste Befestigungseinheit 11 umfasst ferner zwei erste Formschlusselemente 12.1, 12.2 aus einem Elastomer. Die beiden ersten Formschlusselemente 12.1, 12.2 sind auf einer Schwenkplatte angeordnet, womit diese um eine erste Achse schwenkbar sind (siehe Figs. 3 - 5). Hierbei werden die ersten Formschlusselemente 12.1, 12.2 zwischen einer ersten Position und einer zweiten Position geschwenkt. Die erste Position und die zweite Position entsprechen vorzugsweise eine Endposition der Schwenkbewegung. Um ein Schwenken der Schwenkplatte - und somit der beiden ersten Formschlusselemente 12.1, 12.2 um die erste Achse zu ermöglichen, verfügt die erste Befestigungseinheit 11 über einen Hebel 13, welcher um eine zweite Achse, die zur ersten Achse parallel ist, schwenkbar ist. Der Hebel 13 ist über einen Mechanismus mit der Schenkplatte wirkverbunden, so dass durch ein Schwenken des Hebels 13 durch einen Operateur die Schwenkplatte mit den beiden ersten Formschlusselementen 12.1, 12.2, welche zusammen ein Verriegelungselement bilden, geschwenkt werden kann.

Die beiden ersten Formschlusselemente 12.1, 12.2 verfügen über eine Form, welche komplementär zur Kontur der Oberfläche der Blechprofile 4.1-4.3 sind. Dadurch können die beiden ersten Formschlusselemente 12.1, 12.2 in der zweiten Position - wie in der Figur gezeigt - in die Kontur eingreifen, um eine formschlüssige Verbindung mit dieser einzugehen. Dadurch wird die erste Befestigungseinheit 11 und damit die Halterung 10 einerseits an den Blechprofilen 4.1-4.3 befestigt und an einer definierten Position relativ zu diesen fixiert. In der ersten Position sind die ersten Formschlusselemente 12.1, 12.2 von den Profilblechen 4.1-4.3, 5.1 teilweise beabstandet, so dass die Halterung 10 vom Förderelement 2 gelöst werden kann, beispielsweise um dieses an einer anderen Position zu platzieren oder abseits des Förderelements 2 oder Abseits der Vorrichtung 1 zwischenzulagern.

Die Halterung 10 verfügt bei der gezeigten Ausführungsform ferner über eine zweite Befestigungseinheit 15, welche analog zur ersten Befestigungseinheit 11 einstückig mit einer zweiten Montageplatte 17 ausgebildet ist. Die zweite Befestigungseinheit 15 verfügt über zwei zweite Formschlusselemente 16.1, 16.2, welche ebenfalls über eine zur Kontur der Blechprofile 5.1 komplementäre Form aufweisen. Im Unterschied zu den ersten Formschlusselementen 12.1, 12.1 sind die zweiten Formschlusselemente 16.1, 16.2 bei der gezeigten Ausführungsform nicht schwenkbar, sondern fix an der zweiten Befestigungseinheit 15 befestigt.

Die Halterung 10 verfügt ferner über zwei Querstreben 18.1, 18.2, welche die beiden Montageplatten 14, 17 und somit auch die beiden Befestigungseinheiten 11, 15 miteinander verbinden. Die Länge der zwei Querstreben 18.1, 18.2 ist derart, dass das mindestens eine zweite Formschlusselement mit der Kontur der mindestens einen Oberfläche eines ersten Blechprofils auf einer ersten Längsseite des Förderelements und das zweite Formschlusselement in der zweiten Position mit der Kontur der mindestens einen Oberfläche eines zweiten Blechprofils auf einer zweiten Längsseite des Förderelements, welche der ersten Längsseite gegenüberliegt, in formschlüssigen Eingriff steht. Dadurch bildet die auf das Förderelement angeordnete Halterung 10 einen Bogen bzw. ein Portal, mit welchem insbesondere oberhalb der Hauptfläche 6 des Förderelements 2 weitere Elemente 19 angeordnet bzw. befestigt werden können. Bei der gezeigten Ausführungsform sind als weitere Elemente 19 sechs Düsen an der ersten Querstrebe 18.1 angeordnet, mit denen auf der Hauptfläche 6 geförderte Lebensmittel beispielsweise mit Mehl, Zucker oder dergleichen bestreut werden können.

Dadurch, dass nur die ersten Formschlusselemente 12.1, 12.2 schwenkbar sind, kann die Halterung 10 durch einen einzigen Operateur von derjenigen Seite des Förderelements 2 aus, an welcher die erste Befestigungseinheit 11 liegt, am Förderelement 2 befestigt und von diesem gelöst werden, da nur auf dieser Seite des Förderelements 2 der Hebel 13 zu betätigen ist. Bei der Befestigung der Halterung 10 am Förderelement 2 wird der Operateur zunächst die Halterung derart über die Hauptfläche heben, dass die zweite Befestigungseinheit 15 vom Operateur aus gesehen auf der gegenüberliegenden Längskante des Förderelements 2 zu liegen kommt. Danach wird der Operateur die Halterung 10 händisch so positionieren, dass die zwei zweiten Formschlusselemente 16.1, 16.2 eine formschlüssige Verbindung mit der Kontur der auf dieser Längskante des Förderelements 2 liegenden Blechprofile 5.1 eingehen. Anschliessend wird der Operateur die ersten Formschlusselemente 12.1, 12.2, welche sich zunächst in der ersten Position befinden, durch Schwenken des Hebels 13 in die zweite Position schwenken, wobei diese eine formschlüssige Verbindung mit den auf dieser Längskante des Förderelements 2 angeordneten Profilblech 4.1 eingehen. Beim Lösen der Halterung 10 werden die Schritte in der umgekehrten Reihenfolge durchlaufen.

Die Fig. 2 zeigt die erste Ausführungsform der erfindungsgemässen Vorrichtung 1 von vorne, wobei die Beine des Gestells 3 nicht dargestellt sind. In der Fig. 2 gut zu erkennen ist der formschlüssige Eingriff der ersten Formschlusselemente 12.1, 12.2 sowie der zweiten Formschlusselemente 16.1, 16.2 in die Kontur der Oberfläche der jeweiligen Profilblechen 4.1, 5.1.

Die Fig. 3 zeigt eine perspektivische Ansicht einer Ausführungsform einer Halterung 10 für eine erfindungsgemässe Vorrichtung 1. Die gezeigte Halterung 10 weist wiederum zwei Befestigungseinheiten 11, 15 auf, welche einstückig mit entsprechenden Montageplatten 14, 17 ausgebildet sind. Die Montageplatten 14, 17 sind wiederum über zwei Querstreben 18.1, 18.2 miteinander verbunden. In der Fig. 3 ist der Hebel 13 der ersten Befestigungseinheit 11 über ein Kniehebelgelenk 21 mit der Schwenkplatte 20 wirkverbunden. Die beiden ersten Formschlusselemente 12.1, 12.2 sind fix an der Schwenkplatte 20 verbunden. Die beiden ersten Formschlusselemente 12.1, 12.2 und die Schwenkplatte 20 bilden ein Verriegelungselement 35. Die Schwenkplatte 20 ist relativ zur ersten Befestigungseinheit 11 um die erste Schwenkachse A1 schwenkbar an dieser gelagert. Wie auf der Figur zu erkennen ist, ist die Schwenkplatte 20 mittels zweier Drehlager an den Flanschseiten der als H-Profil ausgebildeten ersten Befestigungseinheit 11 gelagert. Der Hebel 13 ist analog über zwei weitere Drehlager um die zweite Schwenkachse A2 relativ zur ersten Befestigungseinheit 11 schwenkbar gelagert.

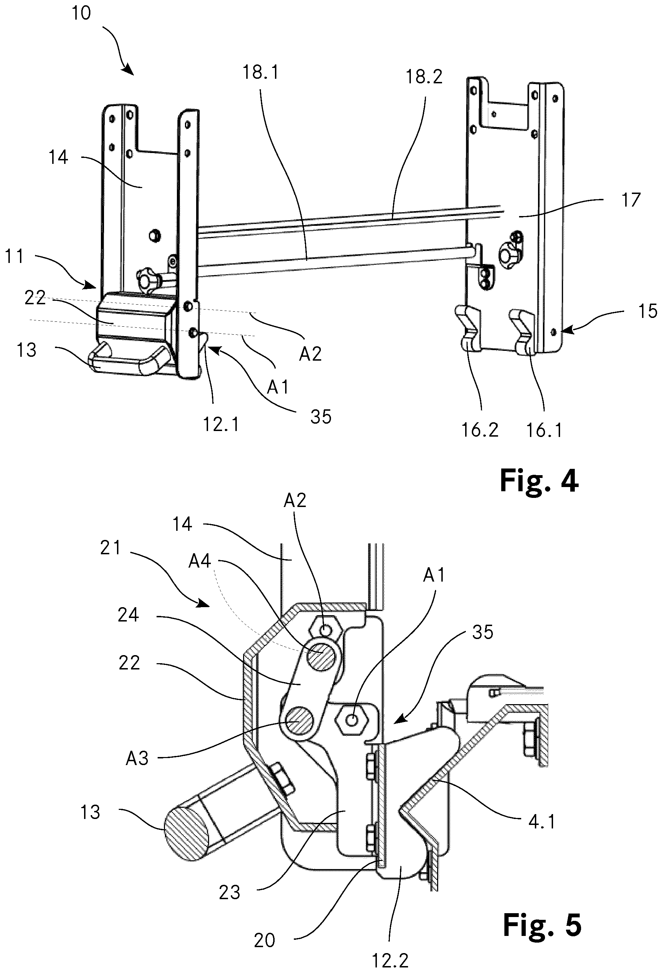

Die Fig. 4 zeigt die Ausführungsform der Halterung 10 gemäss Fig. 3 in einer perspektivischen Ansicht, jedoch aus einem anderen Blickwinkel. Auf dieser Figur gut zu erkennen ist, dass die zweiten Formschlusselemente 16.1, 16.2 fix, das heisst nicht schwenkbar, an der zweiten Befestigungseinheit 15 befestigt sind. Der Hebel 13 ist an einer zweiten Schwenkplatte 22 befestigt, welche um die zweite Achse A2 schwenkbar an der ersten Befestigungseinheit 11 gelagert ist.

Die Fig. 5 zeigt einen Querschnitt durch die erste Befestigungseinheit 11 der Halterung 10 gemäss Figs. 3 und 4. Auf dieser Figur sind insbesondere Details des Kniehebelgelenks 21 erkennbar. Die Schwenkplatte 20 verfügt beidseitig über einen um 90° abgewinkelten Teil 23, welche um die erste Achse A1 schwenkbar an jeweils einer Flanschfläche der als H-Profil ausgebildeten ersten Befestigungseinheit 11 gelagert sind. Weiter sind die abgewinkelten Teile 23 der Schwenkplatte 20 jeweils um eine dritte Achse A3 schwenkbar mit einem ersten Ende eines länglichen Zwischenstücks 24 schwenkbar gelagert. Die dritte Achse ist parallel zur ersten Achse A1 und zur zweiten Achse A2. Das längliche Zwischenstück 24 ist an einem zweiten Ende um eine vierte Achse A4 schwenkbar an der zweiten Schwenkplatte 22, an welcher der Hebel 13 befestigt ist, gelagert. Die vierte Achse A4 ist parallel zur ersten Achse A1, und zur dritten Achse A3. Die zweite Schwenkplatte 22 selbst ist um die zweite Achse A2 schwenkbar an der ersten Befestigungseinheit 11 gelagert. Die zweite Achse A2 ist parallel zu den drei weiteren Achsen A1, A3, A4.

Wird nun der Hebel 13 von einem Operateur nach in der Figur oben und links gezogen, so wird die zweite Schwenkplatte 22 um die zweite Achse A2 geschwenkt. Die vierte Achse A4 wird durch diese Schwenkbewegung mitgezogen und vollführt eine im Wesentlichen kreisförmige Bewegung (gestrichelt dargestellt). Diese führt in der Folge zu eine Schwenkbewegung des Verriegelungselements 35 mit der ersten Schwenkplatte 20 sowie der ersten Formschlusselemente 12.1, 12.2. Dadurch können die ersten Formschlusselemente 12.1, 12.2 mit der Kontur der Oberfläche des Profilblech 5.1 in formschlüssigen Eingriff gebracht werden.

Gut auf der Fig. 5 zu erkennen ist, dass sich das Kniehebelgelenk 21 in der gezeigten zweiten Position in einer Überstreckposition, das heisst, die vierte Achse A4 wurde über einen Totpunkt hinaus bewegt, so dass das Kniehebelgelenk 21 verriegelt ist und somit vor einem unbeabsichtigten Lösen gesichert ist.

Auch gut erkennbar ist der formschlüssige Eingriff der ersten Formschlusselemente 12.1, 12.2 mit der Kontur der Oberfläche des Blechprofils 5.1

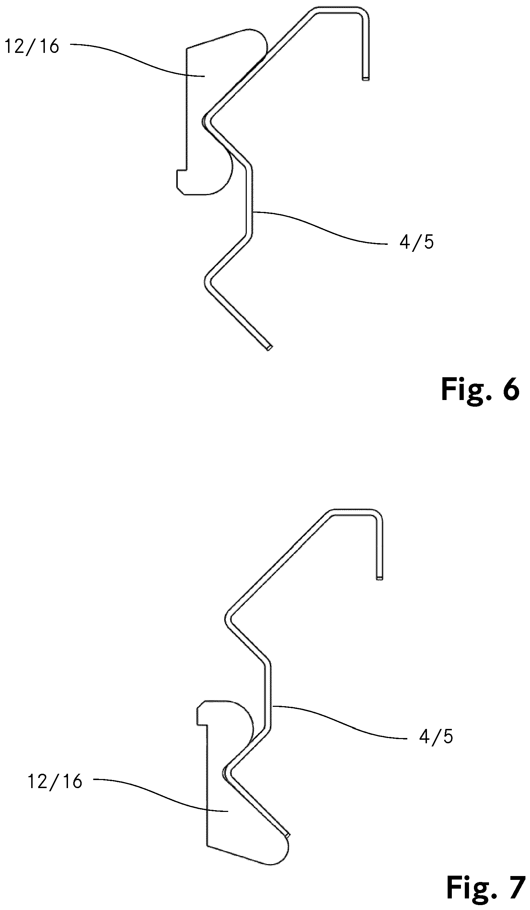

Die Fig. 6 und die Fig. 7 zeigen schematisch die formschlüssige Verbindung zwischen einem ersten Formschlusselement 12 oder einem zweiten Formschlusselement 16 mit einem Profilblech 4,5 in zwei Orientierungen. Die Bildung eines Formschlusses in zwei Orientierungen wird durch die quer zur Längsachse des Profilblechs 4, 5 symmetrisch ausgestaltete Kontur einer Oberfläche des Profilblechs 4, 5 erreicht. Bei der gezeigten Ausführungsform ist die Kontur im Querschnitt im Wesentlichen wie ein aufrecht stehender Buchstabe W geformt. Durch die Bildung eines Formschlusses in den zwei Orientierungen kann eine Halterung 10 derart am Föderelement 2 befestigt werden, dass eine an der entsprechenden ersten Befestigungseinheit 11 oder zweiten Befestigungseinheit 15 befestigte Montageplatte 14, 17 von der Hauptfläche 6 des Förderelements 2 entweder in einer Richtung vertikal nach oben oder in einer Richtung vertikal nach unten von dieser absteht.

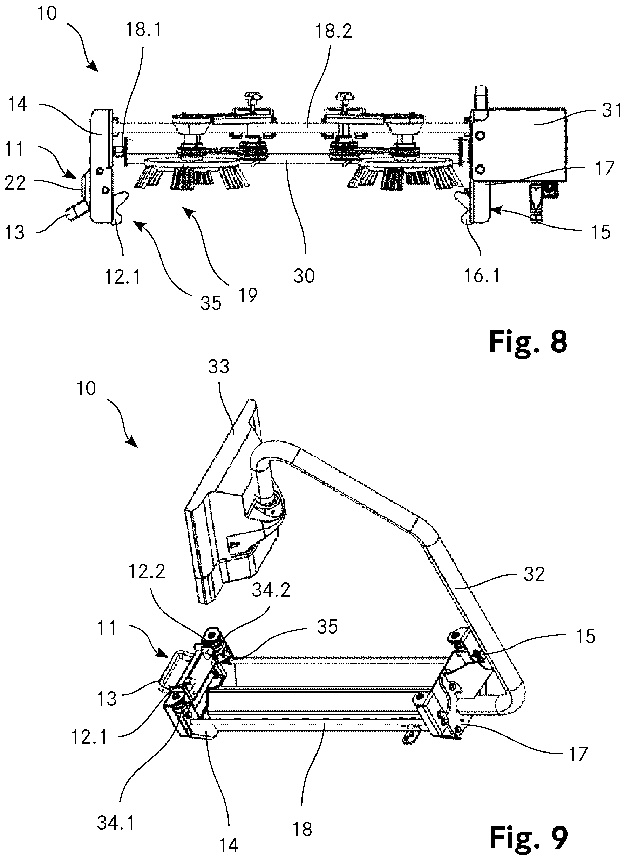

Die Fig. 8 zeigt eine weitere Ausführungsform einer Halterung 10 für eine erfindungsgemässe Vorrichtung 1. Im Unterschied zu den Halterungen, welche in den Figs. 1 - 4 dargestellt sind, verfügt diese Ausführungsform der Halterung 10 über einen Antrieb 31, mit welchem eine auf der ersten Querstrebe 18.1 drehend gelagerte Welle 30 antreibt. Als Bearbeitungsmittel 19 sind zwei Drehbürsten an der zweiten Querstrebe 18.2 befestigt, welche mittels der Welle 30 sowie einem Antriebsriemen in eine Drehbewegung angetrieben werden. Mittels der Drehbürsten kann beispielsweise auf der Hauptfläche 6 des Förderelements 2 anwesendes Mehl von diesem abgebürstet werden.

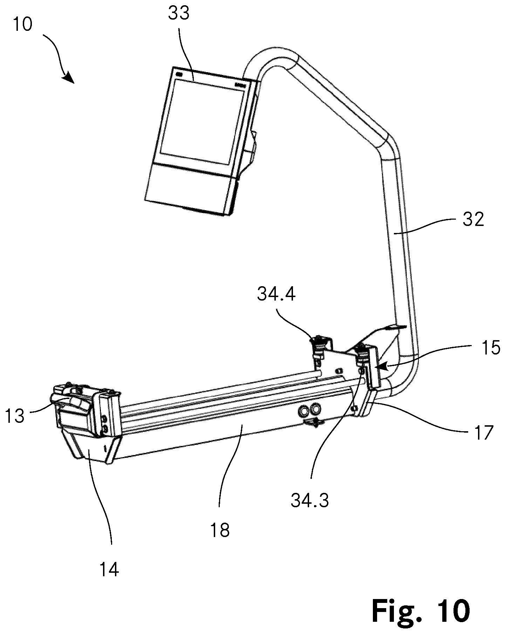

Die Fig.9 und Fig. 10 zeigen eine weitere Ausführungsform einer Halterung 10 für eine erfindungsgemässe Vorrichtung 1 mit Rollen 34.1-34.4. Bei dieser Ausführungsform verfügt lediglich die erste Befestigungseinheit 11 der Halterung 10 über erste Formschlusselemente 12.1, 12.2, während die zweite Befestigungseinheit 15 lediglich über zwei Rollen 34.3, 34.4, jedoch über keinerlei zweite Formschlusselemente verfügt. Weitere zwei Rollen 34.1, 34.2 sind an der ersten Befestigungseinheit 11 angeordnet. Die Rollen 34.1-34.4 sind derart ausgestaltet und angeordnet, dass diese auf der Kontur einer Oberfläche der Profilbleche 4, 5 eingreifen und auf dieser laufen können, so dass eine lineare Verschiebung der Halterung 10 entlang des Förderelements 2 in Richtung von dessen Längsachse L möglich ist. Durch ein Schwenken der ersten Formschlusselemente 12.1, 12.2 in die zweite Position kann die Halterung 10 an einer beliebigen Position entlang des Förderelements 2 durch eine formschlüssige Verbindung zwischen den ersten Formschlusselementen 12.1, 12.2 und der Kontur der Oberfläche des entsprechenden Profilblechs 4, 5 fixiert werden. Zum Verschieben der Halterung 10 werden die ersten Formschlusselemente 12.1, 12.2 in die erste Position geschwenkt, um die formschlüssige Verbindung zu lösen.

Die Halterung verfügt wiederum über eine Querstrebe 18, mit welcher die beiden Befestigungseinheiten 11, 15 miteinander befestigt sind. Bei der gezeigten Ausführungsform ist vorgesehen, dass die Querstrebe 18 unterhalb des Förderelements 2 bzw. unterhalb von dessen Hauptfläche 6 positioniert ist. Die an der zweiten Befestigungseinheit 15 befestigte zweite Montageplatte 17 ist mit einem Haltearm 32 verbunden, welcher ein Display 33 trägt, insbesondere ein Touch-Screen Display. Der Haltearm 32 ist derart konfiguriert, dass das Display 33 oberhalb der Hauptfläche 6 des Förderelements 2 zu liegen kommt.

## Patentansprüche

1. Vorrichtung zur Bearbeitung von Lebensmitteln, insbesondere eines Teigbandes oder von Teiglingen, umfassend ein Förderelement, auf welchem die Lebensmittel in einer Förderrichtung gefördert werden können, sowie eine am Förderelement lösbar befestigte Halterung, wobei an mindestens einer Längsseite des Förderelements mindestens ein Blechprofil befestigt ist, welches sich in einer Längsrichtung des Förderelements im Wesentlichen über die gesamte Länge des Förderelements erstreckt, **dadurch gekennzeichnet, dass** die Halterung eine erste Befestigungseinheit aufweist, welche über mindestens ein erstes Verriegelungselement verfügt, welches zwischen einer ersten Position und einer zweiten Position um eine erste Schwenkachse, welche bei am Förderelement befestigter Halterung im Wesentlichen parallel zu einer Längsrichtung des mindestens einen Blechprofils verläuft, relativ zur ersten Befestigungseinheit schwenkbar ist, wobei das mindestens eine erste Verriegelungselement über mindestens ein erstes Formschlusselement mit einer Form aufweist, welche im Wesentlichen komplementär zu einer Kontur mindestens einer Oberfläche des mindestens einen Blechprofils ist, wobei bei am Förderelement befestigter Halterung das erste Formschlusselement des mindestens einen ersten Verriegelungselements in der zweiten Position mit der Kontur der mindestens einen Oberfläche des mindestens einen Blechprofils formschlüssig in Eingriff steht und in der ersten Position vom mindestens einen Blechprofil zumindest teilweise beabstandet ist.

2. Vorrichtung gemäss Anspruch 1, **dadurch gekennzeichnet, dass** das mindestens eine erste Verriegelungselement mit einem Hebel, welcher um eine zweite Schwenkachse, die parallel zur ersten Schwenkachse verläuft, relativ zur ersten Befestigungseinheit schwenkbar ist, über ein Kniehebelgelenk wirkverbunden ist, so dass mittels Schwenken des Hebels das mindestens eine erste Verriegelungselement von der ersten Position in die zweite Position und umgekehrt geschwenkt werden kann.

3. Vorrichtung gemäss einem der Ansprüche 1 oder 2, **dadurch gekennzeichnet, dass** die Halterung über eine erste Montageplatte verfügt, welche mit der ersten Befestigungseinheit verbunden ist und derart ausgestaltet ist, dass bei am Förderelement befestigter Halterung die erste Montageplatte von einer Hauptfläche des Förderelements, auf welcher die Lebensmittel aufliegen können, rechtwinklig absteht.

4. Vorrichtung gemäss Anspruch 3, **dadurch gekennzeichnet, dass** an beiden Längsseiten des Förderelementsjeweils mindestens ein Blechprofil befestigt ist, wobei die Blechprofile sichjeweils in einer Längsrichtung des Förderelements im Wesentlichen über die gesamte Länge des Förderelements entlang der jeweiligen Längsseite erstrecken und jeweils über mindestens eine Oberfläche verfügen, welche dieselbe Kontur aufweisen, wobei die Halterung über eine zweite Befestigungseinheit verfügt, welche eine zweite Montageplatte aufweist, die derart ausgestaltet ist, dass bei am Förderelement befestigter Halterung die zweite Montageplatte von der Hauptfläche des Förderelements rechtwinklig in derselben Richtung absteht, wie die erste Montageplatte, wobei die erste und die zweite Montageplatte über mindestens eine Querstrebe in einem definierten Abstand relativ zueinander miteinander befestigt sind, wobei der definierte Abstand derart gewählt ist, dass bei am Förderelement befestigter Halterung das mindestens eine erste Formschlusselement in der zweiten Position mit der Kontur der mindestens einen Oberfläche eines ersten Blechprofils auf einer ersten Längsseite des Förderelements in formschlüssigen Eingriff steht und mindestens ein Befestigungselement der zweiten Befestigungseinheit in Wirkverbindung mit einem zweiten Blechprofil auf einer zweiten Längsseite des Förderelements, welche der ersten Längsseite gegenüberliegt, steht.

5. Vorrichtung gemäss Anspruch 4, **dadurch gekennzeichnet, dass** das mindestens eine Befestigungselement ein zweites Formschlusselement ist, welches eine Form aufweist, welche im Wesentlichen komplementär zu einer Kontur der mindestens einer Oberfläche des zweiten Blechprofils ist und bei am Förderelement befestigter Halterung in formschlüssigem Eingriff mit dem zweiten Blechprofil steht.

6. Vorrichtung gemäss Anspruch 4, **dadurch gekennzeichnet, dass** das mindestens eine Befestigungselement eine Rolle ist, welche derart angeordnet und ausgerichtet ist, dass bei am Förderelement befestigter Halterung die mindestens eine Rolle auf dem mindestens einen Blechprofil anliegt, wobei die Drehachse der Rolle rechtwinklig zu einer Längsachse des zweiten Blechprofils steht.

7. Vorrichtung gemäss einem der Ansprüche 1 bis 6, **dadurch gekennzeichnet, dass** das mindestens eine erste Formschlusselement, das mindestens eine zweite Formschlusselement und/oder die mindestens eine Rolle aus einem Polymermaterial gefertigt ist.

8. Vorrichtung gemäss einem der Ansprüche 1 bis 7, **dadurch gekennzeichnet, dass** die mindestens eine Oberfläche des mindestens einen Blechprofils mit der Kontur in einem rechten Winkel zu einer Hauptfläche des Förderelements, auf welchem die Lebensmittel aufliegen können, steht.

9. Vorrichtung gemäss Anspruch 8, **dadurch gekennzeichnet, dass** die Kontur der mindestens einen Oberfläche in einer Richtung rechtwinklig zu einer Längsachse des mindestens einen Blechprofils symmetrisch ausgebildet ist.

10. Vorrichtung gemäss einem der Ansprüche 8 oder 9, **dadurch gekennzeichnet, dass** die Kontur der mindestens einen Oberfläche im Querschnitt im Wesentlichen die Form des Buchstabens W aufweist.

11. Vorrichtung gemäss einem der Ansprüche 1 bis 10, **dadurch gekennzeichnet, dass** die erste Befestigungseinheit über mindestens eine Rolle verfügt, welche derart angeordnet und ausgerichtet ist, dass bei am Förderelement befestigter Halterung die mindestens eine Rolle auf dem mindestens einen Blechprofil in Längsrichtung des mindestens einen Blechprofils abrollt, so dass die mindestens eine Halterung linear entlang des Förderelements bewegbar ist, wenn das mindestens eine erste Verriegelungselement in der ersten Position ist.

12. Vorrichtung gemäss einem der Ansprüche 1 bis 11, **dadurch gekennzeichnet, dass** die Vorrichtung über eine Mehrzahl von Anschlussboxen verfügt, welche entlang der Längsrichtung des Förderelements insbesondere in regelmässigen Abständen angeordnet sind, wobei die Anschlussboxen über mindestens einen elektrischen Anschluss und/oder über mindestens einen Datenanschluss verfügen.
